# EUROPEAN PATENT APPLICATION

(11) **EP 4 644 160 A1**
(43) Date of publication of application: **05.11.2025**
(21) Application number: 25172761.6
(22) Date of filing: 25.04.2025
(51) Int. Cl.: B60K 17/10, B60D 1/06, B60D 1/52, F16H 47/02, B60R 19/02

(54) **WORK VEHICLE**

(30) Priority: 02.05.2024 JP 2024074762
(71) Applicant: Kubota Corporation, Osaka-shi, Osaka 556-8601 (JP)
(72) Inventor: UKAI, Tomoyuki, SAKAI-SHI, OSAKA, 5900908 (JP)
(74) Representative: Cabinet Beau de Loménie

(57) **Abstract**

A work vehicle includes an engine (6), a running gear (2) having rear wheels (22), a continuously variable transmission (8) that protrudes rearward from the rear wheels (22) and that is configured to continuously change driving force from the engine, a guard member (9) covering the continuously variable transmission (8) at least from a rear side, a first attachment portion provided at a position overlapping with the rear wheels (22) in a side view, and an extension member (11) attached to the first attachment portion and protruding rearward from the first attachment portion, in which the extension member (11) is connected to the guard member (9) and has a second attachment portion to which a hitch (14) is attachable.

## Description

### BACKGROUND OF THE INVENTION

### 1. Field of the Invention

The present invention relates to a work vehicle.

### 2. Description of the Related Art

Japanese Patent Application Publication No. JP2019-059373 A (Patent Document 1) discloses a multi-purpose vehicle including a drive unit configured with an engine, a mission case, and a hydraulic static continuously variable transmission (HST), integrally connected in this order from the front side. The hydraulic static continuously variable transmission is supported by a vehicle body frame configured in a frame shape at a rear portion of a body.

Japanese Patent Application Publication No. JP 2024-4953 A (Patent Document 2) discloses a tractor including a mission case disposed at a rear portion of a body, a support portion attached to the mission case, and a hitch portion supported by the support portion. The hitch portion is connected to an object to be towed via a towing member.

In the multi-purpose vehicle described in Patent Document 1, the hydraulic static continuously variable transmission protrudes rearward from the body from the vehicle body frame.

When the hitch portion described in Patent Document 2 is attached as an option to the vehicle body frame of such a multi-purpose vehicle, the portion where the hitch portion is attached is located further forward on the body from the hydraulic static continuously variable transmission. That is, when the hitch portion is attached to the vehicle body frame, the hydraulic static continuously variable transmission protruding rearward from the body from the vehicle body frame may cause obstruction.

### SUMMARY OF THE INVENTION

A work vehicle in which a hitch can be easily attached is desirable. Means for Solving Problem

In accordance with some embodiments, a work vehicle including an engine, a running gear having rear wheels, a continuously variable transmission, that is configured to protrude rearward from the rear wheels and that is configured to continuously change driving force from the engine, a guard member configured to cover the continuously variable transmission at least from a rear side, a first attachment portion provided at a position overlapping with the rear wheels in a side view, and an extension member attachable to the first attachment portion and configured to protrude rearward from the first attachment portion, in which the extension member is connected to the guard member and has a second attachment portion to which a hitch is attachable.

According to the above characteristic configuration, since the extension member protrudes rearward from the first attachment portion, the second attachment portion is located rearward from the first attachment portion. Since the second attachment portion is connected to the guard member, shaking of the second attachment portion is suppressed when the hitch is attached to the second attachment portion. Thus, the hitch can be easily attached from the rear side of the work vehicle.

Another characteristic configuration of the work vehicle according to the present invention is that the work vehicle may further include a body frame that is configured to support the continuously variable transmission, in which the first attachment portion is provided at a rear end portion of the body frame.

Since the continuously variable transmission protrudes rearward from the body frame, the continuously variable transmission causes obstruction when the hitch is attached from the rear side of the work vehicle. According to the above characteristic configuration, the extension member protrudes rearward from the first attachment portion. As a result, obstruction by the continuously variable transmission is suppressed when the hitch is attached to the second attachment portion from the rear side of the work vehicle. Thus, the hitch is easily attached.

Another characteristic configuration of the work vehicle of the present invention is that the extension member may be removably attached to the first attachment portion.

According to the above characteristic configuration, the extension member can be removed when the hitch is not in use. As a result, it is possible to suppress the extension member from coming into contact with an obstacle or the like that is located behind the work vehicle.

Another characteristic configuration of the work vehicle according to the present invention is that the first attachment portion may be located below the guard member.

The first attachment portion is located at a position that is difficult to be visually recognized by the operator when attaching the hitch, due to the continuously variable transmission device or the guard member. According to the above characteristic configuration, the extension member protrudes rearward from the first attachment portion. As a result, the second attachment portion is easily recognized visually from the rear side of the work vehicle. Thus, the hitch is easily attached.

Another characteristic configuration of the work vehicle of the present invention is that the guard member may have a plate-shaped guard portion extending along the rear surface of the continuously variable transmission.

The first attachment portion is located at a position that is difficult to be visually recognized by the operator when attaching the hitch, due to the continuously variable transmission or the plate-shaped guard portion. According to the above characteristic configuration, the extension member protrudes rearward from the first attachment portion. As a result, the second attachment portion is easily recognized visually from the rear side of the work vehicle. Thus, the hitch is easily attached.

Another characteristic configuration of the work vehicle according to the present invention is that the guard member may have a slit, and the second attachment portion may have an engagement portion extending in an up-down direction of the work vehicle and is engageable with the slit.

According to the above characteristic configuration, the extension member can be attached to the first attachment portion with the engagement portion engaged with the slit. As a result, the position is easily adjusted when attaching the extension member to the first attachment portion. Thus, the extension member is easily attached.

Another characteristic configuration of the work vehicle according to the present invention is that the second attachment portion may have a plate-shaped fixing portion extending along the guard portion, and a fixing member, the fixing portion may have a first elongated holes, which extends in an up-down direction of the work vehicle and into which the fixing member is inserted, and the second attachment portion may be fixed to the guard portion by the fixing member inserted into the first elongated holes.

According to the above characteristic configuration, the second attachment portion is fixed to the guard portion by a fixing member inserted into the first elongated holes extending in the up-down direction of the work vehicle. As a result, even in a case where the second attachment portion shakes in the up-down direction by the traveling of the work vehicle, the shaking of the second attachment portion is suppressed from being transmitted to the fixing member.

Thus, loosening of the fixing member fixed to the guard portion is suppressed due to the shaking of the second attachment portion.

Another characteristic configuration of the work vehicle according to the present invention is that the second attachment portion may include a first member extending an up-down direction of the work vehicle, a second member fixed to the guard portion and protruding rearward, and a rod-shaped third member that is configured to connect the first member and the second member, the first member may have a through hole into which the third member is inserted, the second member may have a second elongated hole at a rear end portion of the second member, which extends in a front-rear direction of the work vehicle and into which the third member is inserted, and the first member may be connected to the second member by the third member inserted into the through hole and the second elongated hole.

According to the above characteristic configuration, the first member is connected to the second member by the third member inserted into the second elongated hole extending in the front-rear direction of the work vehicle. As a result, even in a case where the first member shakes in the front-rear direction of the work vehicle due to the traveling of the work vehicle, transmission of the shaking of the first member to the second member is suppressed. As a result, loosening of the fixing member fixed to the guard portion is suppressed due to the shaking of the second member.

Another characteristic configuration of the work vehicle according to the present invention is that the extension member may include a rod-shaped first support member, the first attachment portion may include first opening portions that are formed at side portions of the first attachment portion and into which the rod-shaped first support member included in the extension member is insertable, and the second attachment portion may have second opening portions that are formed at side portions of the second attachment portion and into which a rod-shaped second support member included in the hitch is insertable.

According to the above characteristic configuration, the extension member is fixed to the first attachment portion by the first support member being inserted into the first opening portion. The hitch is fixed by the second support member being inserted into the second opening portion. As a result, detachment of the hitch from the work vehicle is suppressed.

### BRIEF DESCRIPTION OF THE DRAWINGS

Fig. 1 is a left side view illustrating a work vehicle;
Fig. 2 is a rear view illustrating the work vehicle;
Fig. 3 is a perspective view illustrating a cover member and an extension member;
Fig. 4 is a rear view illustrating the periphery of the extension member;
Fig. 5 is a cross-sectional view illustrating the periphery of the extension member in a plan view;
Fig. 6 is a left side longitudinal cross-sectional view illustrating the periphery of a continuously variable transmission with the extension member attached;
Fig. 7 is a left side longitudinal cross-sectional view illustrating the periphery of the continuously variable transmission with the extension member removed;
Fig. 8 is a perspective view illustrating another example of a cover member and an extension member;
Fig. 9 is a rear view illustrating another example of an extension member; and
Fig. 10 is a left side longitudinal cross-sectional view illustrating another example of the periphery of a continuously variable transmission with the extension member attached.

### DESCRIPTION OF THE PREFERRED EMBODIMENTS

### [First Embodiment]

The following is a description of a multi-purpose vehicle, which is an example of a work vehicle according to the present invention, based on the drawings. In the following description, a direction of an arrow F in the drawing is referred to as a "front side", a direction of an arrow B is referred to as a "rear side", a direction of an arrow U is referred to as an "upper side", a direction of an arrow D is referred to as a "lower side", a direction of an arrow R is referred to as a "right side", and a direction of an arrow L is referred to as a "left side".

### [Overall Configuration]

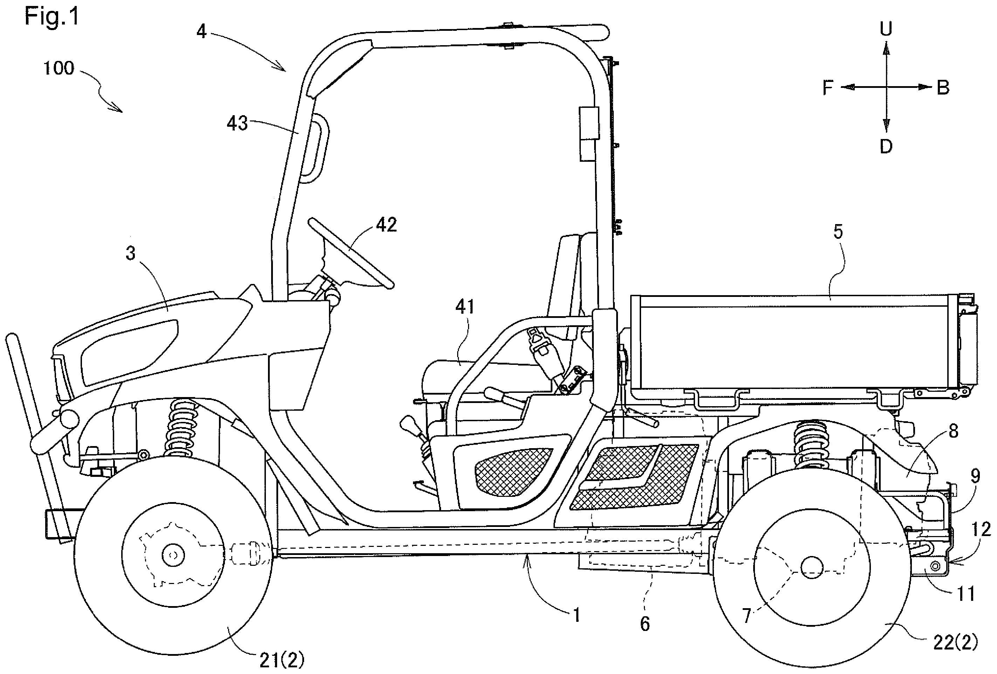

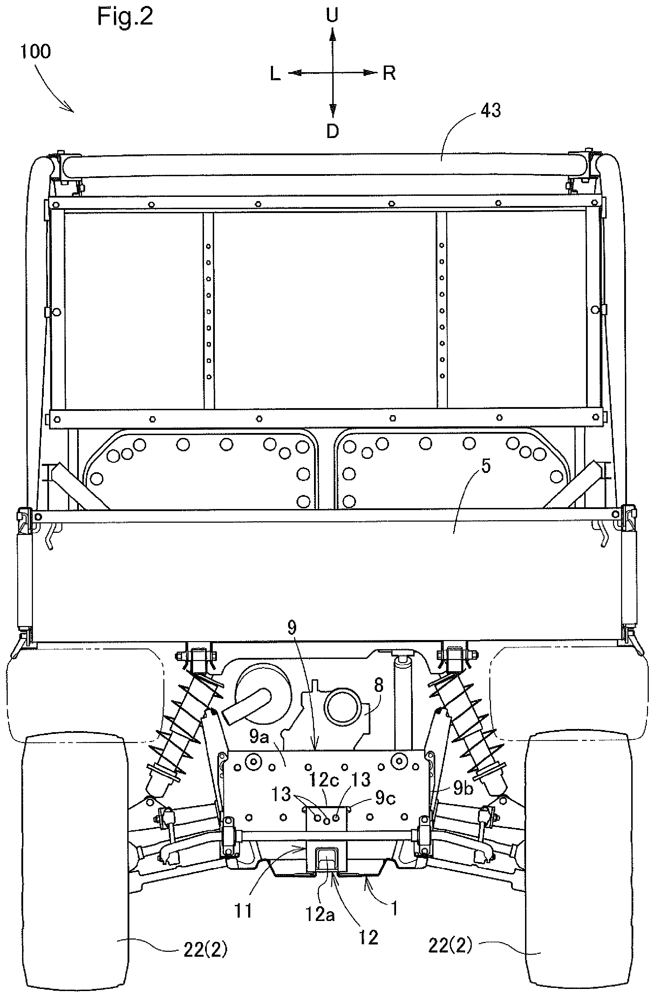

As illustrated in Figs. 1 and 2, a body 100 of a work vehicle includes a body frame 1, a running gear 2 that supports the body frame 1, a hood 3, a passenger section 4 on which an occupant sits, a dump-type cargo bed 5, an engine 6, a transmission 7, a continuously variable transmission 8, a guard member 9 that covers at least the rear side of the continuously variable transmission 8, and an extension member 11.

The running gear 2 has left and right front wheels 21 that can be steered and driven, and left and right rear wheels 22 that cannot be steered and but can be driven. The front wheels 21 support a front portion of the body frame 1. The rear wheels 22 support a rear portion of the body frame 1. The running gear 2 is configured to be switchable between a two-wheel drive state in which only the left and right rear wheels 22 are driven, and a four-wheel drive state in which the left and right front wheels 21 and the left and right rear wheels 22 are driven.

The passenger section 4 is located between the left and right front wheels 21 and the left and right rear wheels 22 in the side view. The passenger section 4 is supported by the body frame 1.

The passenger section 4 has a seat 41 on which the occupant sits, a steering wheel 42 for steering the left and right front wheels 21, and a rollover protective structure (ROPS) 43 for occupant protection. The ROPS 43 surrounds the passenger section 4. The lower end portion of the ROPS 43 is connected to the body frame 1.

The hood 3 is located at a front side from the passenger section 4. The cargo bed 5 is located rearward from the passenger section 4. The hood 3 houses a radiator and other components that cool the cooling water for the engine 6.

As illustrated in Fig. 1, the engine 6, the transmission 7, and the continuously variable transmission 8 are integrally connected in this order from the front side of the body 100. The engine 6, the transmission 7, and the continuously variable transmission 8 are supported by the body frame 1.

The output shaft of the engine 6 extends in the front-rear direction of the body. The driving force from the engine 6 is transmitted to the continuously variable transmission 8.

The continuously variable transmission 8 is a hydraulic static continuously variable transmission. In other words, the continuously variable transmission 8 is a hydraulic static transmission (HST). The continuously variable transmission 8 protrudes rearward from the rear wheels 22.

The output shaft of the continuously variable transmission 8 is connected to the input shaft of the transmission 7. As a result, the driving force, which has been continuously changed by the continuously variable transmission 8, is transmitted to the transmission 7.

Although not specifically illustrated in the drawings, the transmission 7 includes an auxiliary transmission that further changes the driving force, which has been continuously changed by the continuously variable transmission 8, into multiple stages, a gear-type forward/reverse transmission that switches between forward and reverse travel, a differential mechanism for the rear wheels, and the like.

The force which has been changed by the transmission 7 is transmitted to the left and right rear wheels 22 or the left and right front wheels 21 and the left and right rear wheels 22. In other words, the continuously variable transmission 8 transmits the driving force from the engine 6 to the running gear 2 via the transmission 7.

### [Guard Member]

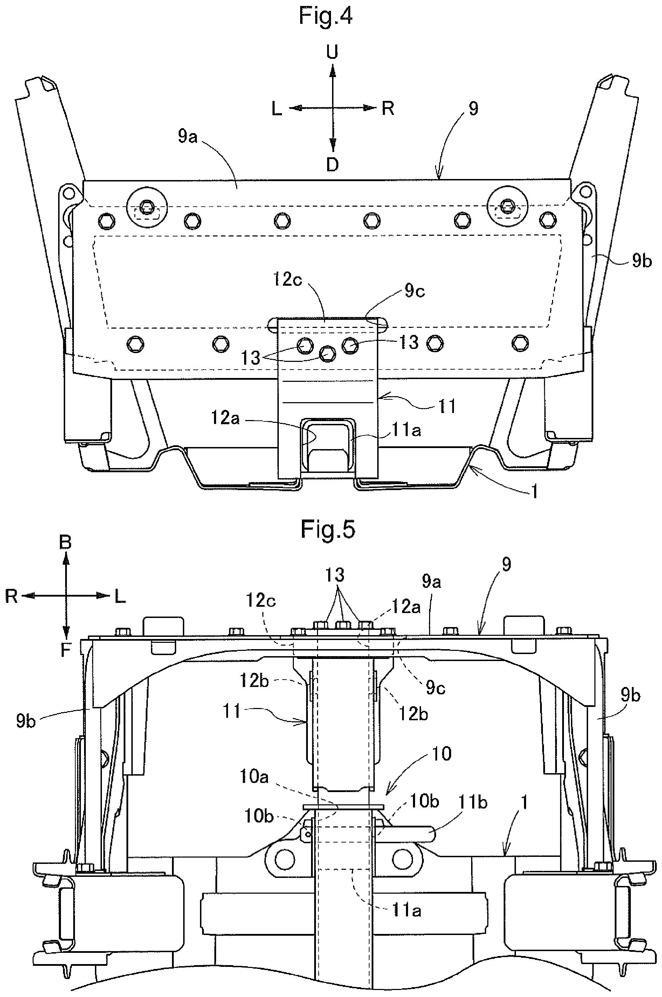

As illustrated in Figs. 2, 3, and 4, the guard member 9 has a plate-shaped guard portion 9a extending along the rear surface of the continuously variable transmission 8, a support portion 9b extending rearward from the rear portion of the body frame 1, and a slit 9c formed at the guard portion 9a.

The front end portion of the support portion 9b is connected to the rear portion of the body frame 1. The rear end portion of the support portion 9b is connected to the guard portion 9a.

In the present embodiment, the longitudinal direction of the slit 9c is along the left-right direction of the body 100. The present invention is not limited thereto, and for example, the longitudinal direction of the slit 9c may be aligned along the up-down direction of the work vehicle.

The slit 9c is located at the center of the guard portion 9a in the left-right direction of the work vehicle in the rear view. The slit 9c is located below the center of the guard portion 9a in the up-down direction of the work vehicle in the rear view.

In the present embodiment, the number of the slits 9c is one. The present invention is not limited thereto, and the number of the slits 9c may be multiple. For example, the two slits 9c may be located symmetrically across the center of the guard portion 9a in the left-right direction of the work vehicle.

### [First Attachment Portion]

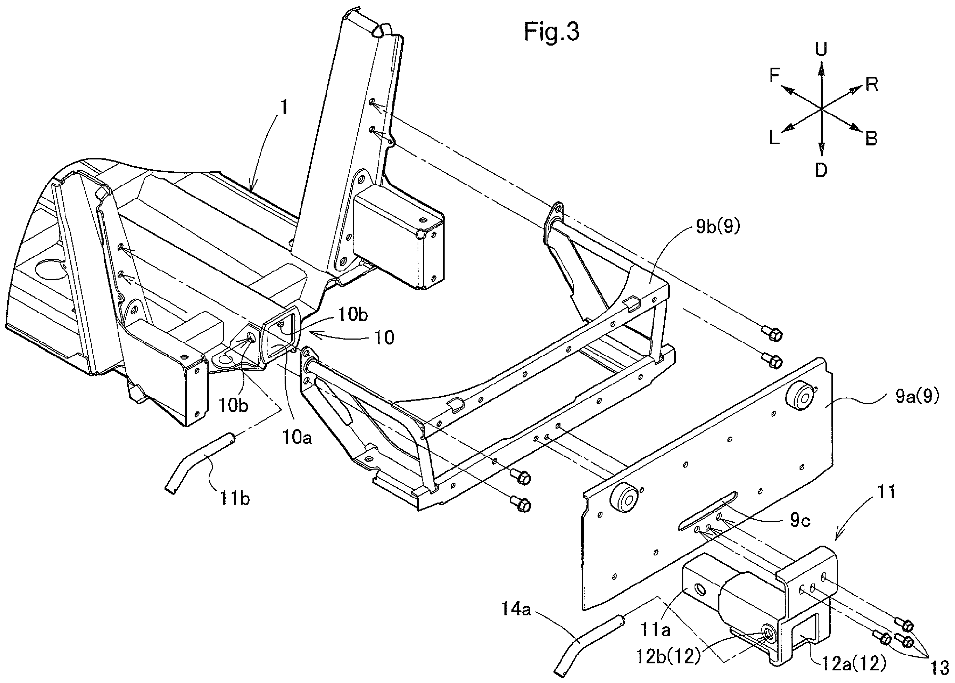

As illustrated in Figs. 3, 5, and 6, the work vehicle includes a first attachment portion 10 to which the extension member 11 is attachable. The first attachment portion 10 is located at the rear end portion of the body frame 1. The rear end portion of the body frame 1 is located to overlap with the rear wheels 22. In other words, the first attachment portion 10 is provided at a position overlapping with the rear wheels 22 in the side view. The first attachment portion 10 is located at the center of the body 100 in the left-right direction of the work vehicle.

The first attachment portion 10 is located below the guard member 9. Specifically, the first attachment portion 10 is located inside the body 100 in the front-rear direction of the body 100 from the guard portion 9a in the side view. The first attachment portion 10 is located below the continuously variable transmission 8.

The first attachment portion 10 includes a first insertion opening 10a that opens toward the rear of the body 100 and first opening portions 10b formed at the left and right side portions of the first attachment portion 10.

### [Extension Member]

As illustrated in Figs. 3, 5, and 6, the body 100 of the work vehicle includes an extension member 11 protruding rearward from the first attachment portion 10. The extension member 11 is attachable to the first attachment portion 10.

The rear end portion of the extension member 11 is located rearward from the body 100 from the continuously variable transmission 8.

The extension member 11 has an insertion portion 11a that is insertable into the first attachment portion 10, a rod-shaped first support member 11b, and a second attachment portion 12 to which a hitch 14 is attachable. The insertion portion 11a is located at the front end portion of the extension member 11. The second attachment portion 12 is located at the rear end portion of the extension member 11. The extension member 11 is removably attached to the first attachment portion 10.

The first support member 11b is a member separate from the extension member 11. To prevent the first support member 11b from falling out, the first support member 11b has a pin hole and a retaining pin that is inserted into and withdrawn from the pin hole.

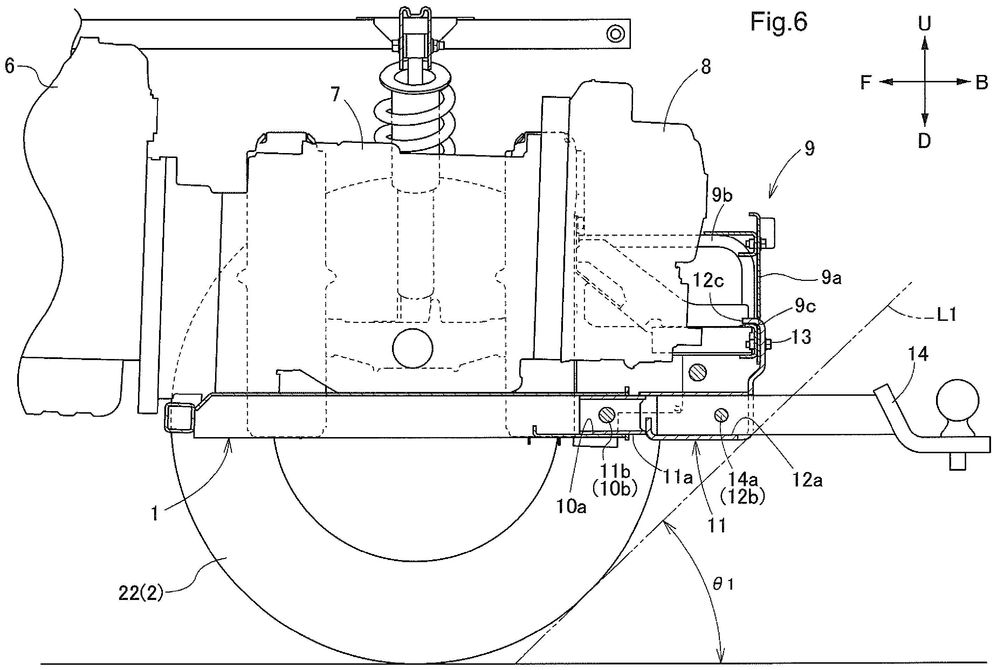

As illustrated in Fig. 6, the hitch 14 is a member that can be connected to an object to be towed. The front end portion of the hitch 14 is insertable into the second attachment portion 12. The hitch 14 has a through hole formed at the left and right side portions of the hitch 14 and penetrating in the left-right direction of the work vehicle, and a rod-shaped second support member 14a that is insertable into the through hole. The present invention is not limited thereto, and the hitch 14 can be of any shape as long as the hitch 14 is attachable to the second attachment portion 12.

The second support member 14a is a member separate from the hitch 14. To prevent the second support member 14a from falling out, the second support member 14a has a pin hole and a retaining pin that is inserted into and withdrawn from the pin hole.

The line L1 in Fig. 6 is a straight line connecting the ground surface located behind the center of the rear wheel 22 and the lower end portion at the rear end portion of the extension member 11, with the extension member 11 attached to the first attachment portion 10. An angle θ1 is the angle formed by the ground surface of the running gear 2 and the line L1.

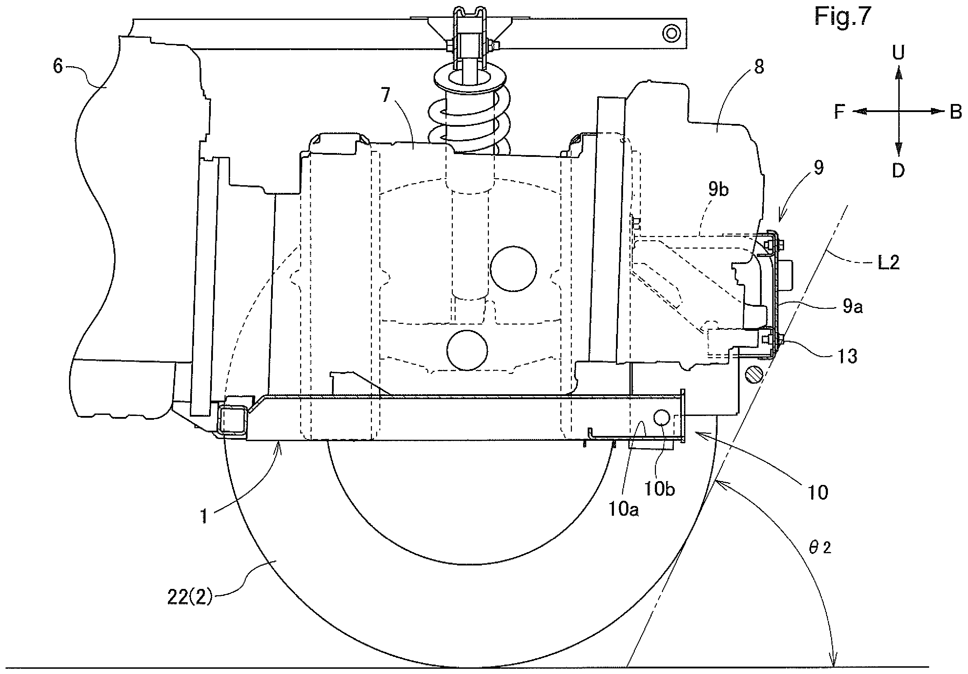

The line L2 in Fig. 7 is a straight line connecting the ground surface located behind the center of the rear wheel 22 and the lower end portion at the rear end portion of the guard member 9, with the extension member 11 removed from the first attachment portion 10. An angle θ2 is an angle formed by the ground surface of the running gear 2 and the line L2.

The angle θ2 is larger than the angle θ1. As a result, when the hitch 14 is not in use, the departure angle of the body 100 can be increased by removing the extension member 11 together with the hitch 14 from the first attachment portion 10. In other words, when the work vehicle travels on the uneven ground, the rear end portion of the work vehicle is suppressed from coming into contact with the uneven ground.

### [Second Attachment Portion]

As illustrated in Figs. 3, 5, and 6, the second attachment portion 12 has a second insertion opening 12a that opens toward the rear of the body 100 and into which the hitch 14 is insertable, a second opening portion 12b formed at the left and right side portions of the second attachment portion 12, and an engagement portion 12c that extends upward from the second attachment portion 12 and is engageable with the slit 9c.

The engagement portion 12c is a plate-shaped member. The upper end portion of the engagement portion 12c is folded back inward in the front-rear direction of the body 100. The upper end portion of the engagement portion 12c is engaged with the slit 9c of the guard portion 9a. With the engagement portion 12c engaged with the slit 9c, the engagement portion 12c is connected to the guard portion 9a by a fixing member 13 such as a bolt. In other words, the second attachment portion 12 is connected to the guard member 9.

### [Regarding Attachment of Extension Member and Hitch]

As illustrated in Figs. 3 and 6, the insertion portion 11a of the extension member 11 is inserted into the first insertion opening 10a of the first attachment portion 10 by human operation. Specifically, the insertion portion 11a is inserted to a position at which a through hole extending in the left-right direction of the insertion portion 11a overlaps with the left and right first opening portions 10b in the side view. As a result, the first opening portions 10b on the left and right side are connected to the through holes in the insertion portion 11a.

Next, the first support member 11b of the extension member 11 is inserted into the first opening portion 10b. As a result, the extension member 11 is fixed to the first attachment portion 10. Next, a retaining pin is inserted into the pin hole of the first support member 11b. As described above, the extension member 11 is thus attached to the first attachment portion 10.

Next, the hitch 14 is inserted into the second insertion opening 12a of the extension member 11 by human operation. Specifically, the hitch 14 is inserted to a position at which the through hole of the hitch 14 overlaps with the left and right second opening portions 12b in the side view. As a result, the second opening portions 12b on the left and right side are connected to the through holes in the hitch 14.

Next, the second support member 14a of the hitch 14 is inserted into the second opening portion 12b. In other words, the hitch 14 is fixed to the second attachment portion 12.

Next, a retaining pin is inserted into the pin hole of the second support member 14a. As described above, the hitch 14 is attached to the second attachment portion 12.

With the above configuration, the extension member 11 allows the second attachment portion 12 to be located rearward from the body 100 from the continuously variable transmission 8. As a result, since the continuously variable transmission 8 or guard member 9 is not located diagonally above the rear of the second attachment portion 12, it is easier for the operator to visually recognize the second attachment portion 12. Thus, the hitch 14 is easily attached to the second attachment portion 12 by the operator.

### [Second Embodiment]

The following is a description of another example of the work vehicle according to the present invention, focusing on the points different from the first embodiment. The same reference numerals are used for the same configurations as in the first embodiment. The description of the same configuration as in the first embodiment may be omitted.

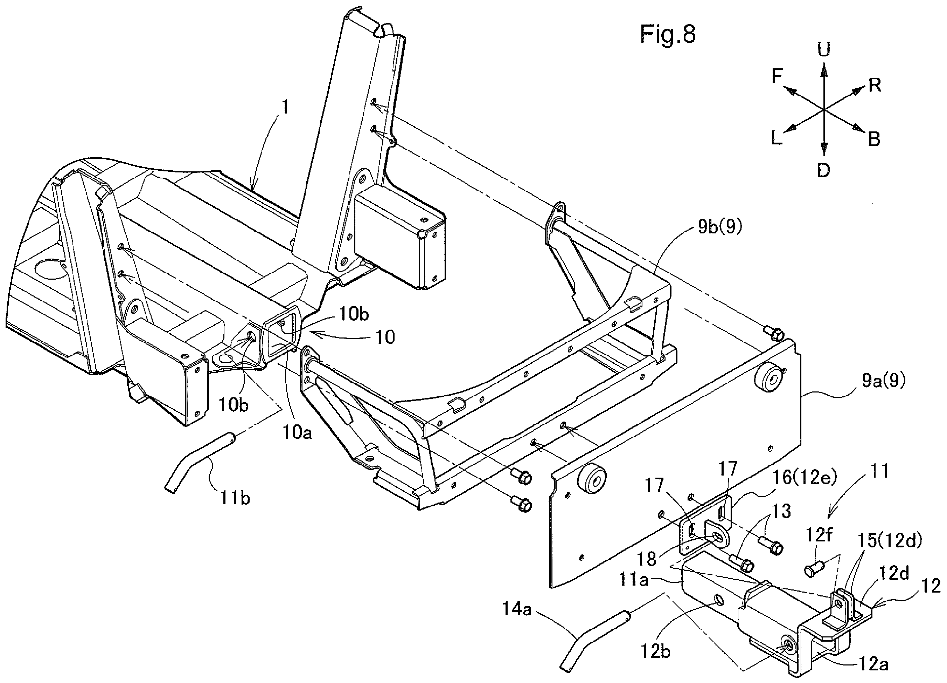

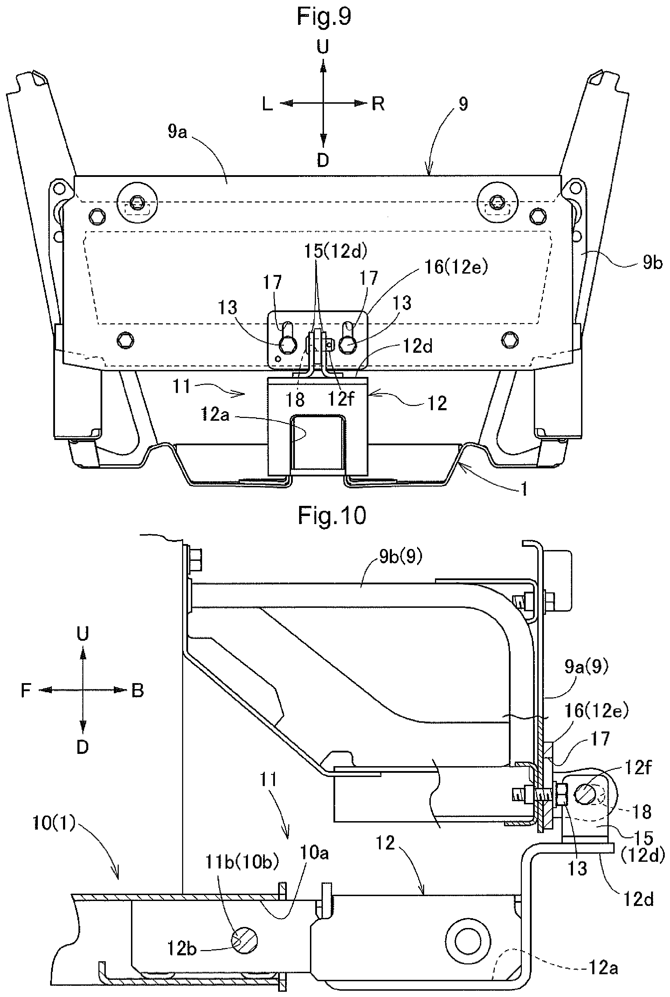

As illustrated in Figs. 8, 9, and 10, the guard member 9 has a guard portion 9a and a support portion 9b. In the present embodiment, the guard member 9 does not have a slit 9c formed at the guard portion 9a.

### [Second Attachment Portion]

As illustrated in Figs. 8, 9, and 10, the second attachment portion 12 includes a second insertion opening 12a, a second opening portion 12b, a first member 12d extending upward from the second attachment portion 12, a second member 12e fixed to the guard portion 9a and protruding rearward, and a rod-shaped third member 12f connecting the first member 12d and second member 12e. In the present embodiment, the second attachment portion 12 does not have the engagement portion 12c that is engageable with the slit 9c.

The first member 12d is a plate-shaped member. The first member 12d extends upward from the second attachment portion 12 and then bends toward the rear of the body 100. The first member 12d has a pair of plate-shaped members 15 that face each other at an upper end portion of the first member 12d with a predetermined spacing therebetween. Each of the pair of plate-shaped members 15 has a through hole into which the third member 12f is inserted.

The second member 12e includes a plate-shaped fixing portion 16 extending along the guard portion 9a at the front end portion of the second member 12e. The fixing portion 16 has a plurality of elongated holes 17 (corresponding to the first elongated holes) that extend longitudinally along the up-down direction of the work vehicle and through which the fixing member 13 is inserted. The elongated hole 17 penetrates the fixing portion 16 along the front-rear direction of the body 100. The second member 12e extends rearward from the guard portion 9a. The second member 12e has an elongated hole 18 (corresponding to the second elongated hole) at the rear end portion of the second member 12e that extends longitudinally along the front-rear direction of the body 100 and into which the third member 12f is inserted. The elongated hole 18 penetrates the second member 12e along the left-right direction of the body 100. The second member 12e is located between the pair of plate-shaped members 15.

The third member 12f is a member separate from the second attachment portion 12. To prevent the third member 12f from falling out, the third member 12f includes a pin hole and a retaining pin that is inserted into and withdrawn from the pin hole.

### [Regarding Fixing of Second Attachment Portion to Guard Member]

The fixing member 13 is inserted into the elongated hole 17 with the fixing portion 16 of the second member 12e aligned with the guard portion 9a. Next, the second member 12e is fixed to the guard portion 9a by the fixing member 13. In other words, the second attachment portion 12 is fixed to the guard portion 9a by the fixing member 13 inserted into the elongated hole 17.

With the through holes of the pair of plate-shaped members 15 connected to the elongated hole 18 of the second member 12e, the third member 12f is inserted into the through holes of the pair of plate-shaped members 15 and the elongated hole 18. In other words, the first member 12d is connected to the second member 12e by the third member 12f that is inserted into the through hole in the first member 12d and the elongated hole 18 in the second member 12e.

As described above, the second attachment portion 12 is connected to the guard member 9 by the first member 12d, the second member 12e and the third member 12f.

### [Other Embodiments]

The present invention is not limited to the configuration exemplified in the above-described embodiment, and representative different embodiments of the present invention will be described below.
[1] In the embodiment described above, the guard portion 9a is a plate-shaped member that extends along the rear surface of the continuously variable transmission 8. The present invention is not limited thereto, and the guard portion 9a can be a rod-shaped member extending in the left-right direction of the body 100 along the rear surface of the continuously variable transmission 8.
[2] The guard member 9 may have a circular through hole formed at the guard portion 9a instead of the slit 9c. In this case, the upper end portion of the engagement portion 12c is rod-shaped.
[3] In the embodiment described above, the hitch 14 is fixed to the second attachment portion 12 by the second support member 14a. The present invention is not limited thereto, and the hitch 14 may be fixed to the second attachment portion 12 by bolts.
[4] In the above-described embodiment, the extension member 11 is attached to the first attachment portion 10 by the first support member 11b. The present invention is not limited thereto, and the extension member 11 may be fixed to the first attachment portion 10 by bolts.
[5] In the embodiment described above, the rear end portion of the extension member 11 is located rearward from the body 100 from the continuously variable transmission 8. The present invention is not limited thereto, and the rear end portion of the extension member 11 may overlap with the continuously variable transmission 8 in the plan view.
[6] In the embodiment described above, the first attachment portion 10 is provided at a position overlapping with the continuously variable transmission 8 in the plan view. The present invention is not limited thereto, and the first attachment portion 10 may be located at a position that does not overlap with the continuously variable transmission 8 in the plan view. Specifically, the first attachment portion 10 may be located lower left of the continuously variable transmission 8 or lower right of the continuously variable transmission 8 in the rear view.
[7] The engagement portion 12c does not have to be connected to the guard member 9 by the fixing member 13. In other words, the second attachment portion 12 may be connected to the guard member 9 solely by the engagement portion 12c being engaged with the slit 9c.
[8] The engagement portion 12c may have a member protruding inward in the front-rear direction of the body 100 from the midsection of the engagement portion 12c in the up-down direction. In this case, the midsection of the engagement portion 12c in the up-down direction is engaged with the slit 9c.
[9] The second attachment portion 12 may be connected to the guard member 9 by a chain, wire, or a plurality of arm-shaped members extending upward from the second attachment portion 12.
[10] In the embodiment described above, a multi-purpose vehicle is shown as an example of the work vehicle. The present invention is not limited thereto and can be applied to work vehicles such as tractors, rice transplanters, paddy direct seeders, and construction work equipment, for example.
[11] The configuration disclosed in the above embodiments (including other embodiments, the same hereinafter) can be applied in combination with the configuration disclosed in other embodiments as long as no contradiction arises, and the embodiments disclosed herein are examples and are not limited thereto and can be modified as appropriate within the scope without departing from the purpose of the invention.

The present invention can be applied to a work vehicle.

## Claims

1. A work vehicle, comprising:
an engine (6);
a running gear having rear wheels (22);
a continuously variable transmission (8) configured to protrude rearward from the rear wheels (22) and continuously change driving force from the engine (6);
a guard member (9) configured to cover the continuously variable transmission (8) at least from a rear side;
a first attachment portion (10) provided at a position overlapping with the rear wheels (6) in a side view; and
an extension member (11) attached to the first attachment portion (10) and configured to protrude rearward from the first attachment portion (10),
wherein the extension member (11) is connected to the guard member (9) and has a second attachment portion (12) to which a hitch is attachable.

2. The work vehicle according to claim 1, further comprising:
a body frame (1) that is configured to support the continuously variable transmission (8),
wherein the first attachment portion (10) is provided at a rear end portion of the body frame (1).

3. The work vehicle according to claim 1 or 2,
wherein the extension member (11) is removably attached to the first attachment portion (10).

4. The work vehicle according to any one of claims 1 to 3,
wherein the first attachment portion (10) is located below the guard member (9).

5. The work vehicle according to any one of claims 1 to 4,
wherein the guard member (9) has a plate-shaped guard portion (9a) extending along a rear surface of the continuously variable transmission (8).

6. The work vehicle according to claim 5,
wherein the guard portion (9a) has a slit (9c), and
the second attachment portion (12) has an engagement portion (12c) extending in an up-down direction of the work vehicle and is engageable with the slit (9c).

7. The work vehicle according to claim 5 or 6,
wherein the second attachment portion (12) has a plate-shaped fixing portion (16) extending along the guard portion (9a), and a fixing member (13),
the fixing portion (16) has a first elongated holes (17) extending in an up-down direction of the work vehicle and into which the fixing member (13) is inserted, and
the second attachment portion (12) is fixed to the guard portion (9a) by the fixing member (13) inserted into the first elongated holes (17).

8. The work vehicle according to any one of claims 5 to 7,
wherein the second attachment portion (12) includes a first member (12d) extending in an up-down direction of the work vehicle, a second member (12e) fixed to the guard portion (9a) and protruding rearward, and a rod-shaped third member (12f) that is configured to connect the first member (12d) and the second member (12e),
the first member (12d) has a through hole into which the third member (12f) is inserted,
the second member (12e) has a second elongated hole (18) at a rear end portion of the second member (12e), which extends in a front-rear direction of the work vehicle and into which the third member (12f) is inserted, and
the first member (12d) is connected to the second member (12e) by the third member (12f) inserted into the through hole and the second elongated hole (12f).

9. The work vehicle according to any one of claims 1 to 8,
wherein the extension member (11) includes a rod-shaped first support member (11b),
the first attachment portion (10) includes first opening portions (10b) that are formed at side portions of the first attachment portion (10) and into which the first support member (11b) is insertable, and
the second attachment portion (12) has second opening portions (12b) that are formed at side portions of the second attachment portion (12) and into which a second support member (14a) included in the hitch (14) is insertable.
